# EUROPÄISCHE PATENTSCHRIFT

(11) **EP 1 617 715 B1**
(45) Veröffentlichungstag und Bekanntmachung des Hinweises auf die Patenterteilung: **01.10.2014**
(21) Anmeldenummer: 05105856.8
(22) Anmeldetag: 30.06.2005
(51) Int. Cl.: H05K 5/00, H02B 1/50, H02B 1/30

(54) **Dachmodul-Bausatz für Verteilerschränke**
Roof module for a distribution cabinet
Module de toit pour une armoire de distribution

(30) Priorität: 14.07.2004 DE 102004033976
(43) Veröffentlichungstag der Anmeldung: 18.01.2006
(73) Patentinhaber: Berthold Sichert GmbH, 12277 Berlin (DE)
(72) Erfinder: Irmer, Günter, 13055 Berlin (DE); Perschon, Helmut, 12277 Berlin (DE)
(74) Vertreter: Alber, Norbert

(56) Entgegenhaltungen:
- EP-A- 1 587 199
- EP-A1- 1 047 167
- EP-A2- 1 458 073
- EP-B1- 1 597 804
- DE-A1- 10 105 993
- DE-A1- 19 609 699
- DE-U1- 20 003 279
- FR-A1- 2 785 763
- US-A1- 2002 140 325

## Beschreibung

### I. Anwendungsgebiet

Die Erfindung betrifft Elektro-Verteiler-Schränke, wie sie bevorzugt im Freien, beispielsweise auf Gehwegen oder Straßenrändern, aufgestellt sind und vorzugsweise elektrische Komponenten für die Telekommunikation enthalten, nämlich z. B. die Verteilung an die einzelnen Hausanschlüsse, zusätzliche Verstärker oder andere aktive elektrische Komponenten.

### II. Technischer Hintergrund

Bei derartigen Verteilerschränken besteht das aus Metall oder Kunststoff bestehende Gehäuse aus Umfangswänden und einem darauf aufgesetzten Dach, welches die im Inneren befindlichen elektrischen Komponenten schützt. Das Gehäuse ist auf einem Sockel oder Unterbau aufgesetzt, durch welchen hindurch die im Erdboden verlegten elektrischen Leitungen ins Innere des Gehäuses geführt werden.

Da ein Auswechseln eines solchen Verteilerschrankes, selbst nur des Gehäuses des Verteilerschrankes, häufig mit einer längeren Betriebsunterbrechung der daran enthaltenden Komponenten einhergeht, wird versucht, bei notwendigen Nachrüstungen des Verteilerschrankes dies möglichst schnell zu bewerkstelligen, vor allem ohne zusätzliche Betriebsunterbrechung.

Solche Nachrüstungen der Verteilerschränke können aus unterschiedlichen Gründen notwendig werden:

Zum einen ist - vor allem wenn zusätzliche aktive elektrische Komponenten im Inneren des Verteilerschrankes markiert werden - die Abfuhr der im Inneren entstehenden Verlustwärme dieser Komponenten durch das Gehäuse nach außen nicht mehr ausreichend. Zum anderen sollen häufig zusätzliche elektrische Komponenten im Verteilerschrank untergebracht werden, die jedoch entweder dort keinen Platz mehr finden oder aus anderen Gründen nicht zusammen mit den dort bereits vorhandenen elektrischen Elementen eng verbaut werden dürfen.

Ein typischer Anwendungsfall hierbei ist die gewünschte Unterbringung von Antennen oder Antennen-Empfängereinheiten in den in großer Anzahl und vergleichsweise geringem Abstand zueinander vorhandenen Verteilerschränken, um mittels dieser Antennen drahtlos die Reststrecke zwischen den potentiellen Nutzern und einem möglichen Betreiber eines Telekommunikations- und/oder Datennetzes zu überbrücken.

Um eine solche Nachrüstung von vorhandenen Verteilerschränken, vorzugsweise ohne Betriebsunterbrechung, zu realisieren, wird das vorhandene Dach des Verteilerschrankes gegen ein neues, einen eigenen nennenswerten Innenraum besitzendes und damit den Innenraum des gesamten Verteilerschrankes vergrößerndes Dachmodul ausgetauscht.

DE 200 03 279 (U1), DE 101 05 993 A1, EP 1 047 167 A1, FR 2 785 763, DE 196 09 699 A1, EP 1 458 073 A2 und EP 1 597 804 B1 zeigen Elektro-Verteilerschränke, insbesondere zur Anordnung im Freien, mit einem äusseren Schrankkorpus mit wenigstens einer Tür und einem Schrankdeckel, wobei unterhalb des Schrankdeckels eine Kühlvorrichtung vorgesehen ist.

Der in DE 200 03 279 (U1) gezeigte Verteilerschrank umfasst ein oberes Zwischenteil, welches zwischen dem oberen Rand des Korpus und dem Deckel anordenbar ist. Das obere Zwischenteil besteht aus einem die elektromagnetische Strahlung zurückhaltendem Material, insbesondere aus Aluminium. An einem Zwischenboden des Zwischenteils ist in inniger Anlage an diesem wenigstens ein nach unten, in Richtung auf den Korpus hin abragender, unterer Kühlkörper mit einer grossen Oberfläche, insbesondere mit Kühlrippen aus einem Material mit guter Wärmeleitfähigkeit, insbesondere aus Aluminium, angeordnet, und insbesondere an der gleichen Stelle wie der untere Kühlkörper jedoch auf der Oberseite des Zwischenbodens ist ein oberer Kühlkörper in inniger Anlage an den Zwischenboden angeordnet, der aus einem Material mit guter Leitfähigkeit, insbesondere Aluminium, besteht und eine grosse Oberfläche aufweist. Zentrisch zum geometrischen Treffpunkt der Kühlrippen kann ein Lüfterrad angeordnet sein.

EP 1 587 199 A1 zeigt eine Verteilereinrichtung, die unterflur in einen Schacht einbaubar ist.

### III. Darstellung der Erfindung

### a) Technische Aufgabe

Es ist daher die Aufgabe der Erfindung, ein Dachmodul und insbesondere einen Dachmodul-Bausatz zur Verfügung zu stellen, mit dem unterschiedliche Nachrüst-schnell und kostengünstig gelöst werden können, sowie ein Verfahren zum Nachrüsten der Verteilerschränke.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Dabei besteht das Hauptproblem darin, dass die umzurüstenden Verteilerschränke von unterschiedlichen Herstellern stammen, konstruktiv und vom Material her unterschiedlich gestaltet sind und unterschiedliche Abmessungen besitzen.

Um nicht für jeden verschiedenen Verteilerschrank ein separates, passendes Dachmodul für die Umrüstung zur Verfügung stellen zu müssen, werden mehrere Möglichkeiten vorgeschlagen:

Falls im wesentlichen einstückige Dachmodule, also wenigstens vom Dachmodul-Gehäuse her einstückige, Dachmodule verwendet werden, kann für Verteilerschränke, die zwar verschieden gestaltet sind, die aber von der Grundfläche her im wesentlichen gleich groß sind, ein und dasselbe Dachmodul verwendet werden, wenn dieses Dachmodul Befestigungsvorrichtungen passend zu den verschiedenen, aber in der Grundfläche etwa gleich großen, Verteilerschränken, auf deren offene Oberseiten das Dachmodul aufgesetzt werden soll, aufweisen.

Vorzugsweise werden dann mehrere verschieden große derartige Dachmodule zur Verfügung stehen, z. B. in bestimmten Größenstufen, so dass eine große Zahl von Verteilerschränken mit Hilfe einer wesentlich geringeren Anzahl verschiedener Dachmodule nachgerüstet werden kann.

Bevorzugt jedoch werden die unterschiedlichen Dachmodule nicht einstückig hergestellt, sondern aus einem Dachmodul-Bausatz zusammengestellt und montiert.

Dies hat den Vorteil, dass nicht nur unterschiedliche Gestaltungen des Dachmoduls hinsichtlich der unterschiedlichen Abmessungen und Grundflächen oder unterschiedlichen Befestigungsvorrichtungen gegenüber verschiedenen Verteilerschränken passend zusammengestellt werden können, sondern auch hinsichtlich unterschiedlicher Höhen des gewünschten Dachmoduls und unterschiedlicher Gestaltungen, was den Einsatzzweck angeht. Sogar die rein designmäßig unterschiedliche Gestaltung einzelner Elemente, z. B. des Daches des Dachmoduls, ist möglich.

Auf diese Art und Weise kann mit einer nochmals geringeren Anzahl von Einzelteilen eine nochmals sehr viel größere Bandbreite von vorhandenen Verteilerschränken für verschiedene Anwendungsfälle nachgerüstet werden.

Vorzugsweise bei einer Erstellung des Dachmoduls aus einem Bausatz heraus, wird das Dachmodul unterteilt in einen Adapter-Rahmen, der das untere Ende des Dachmoduls bildet und vor allem der Befestigung an dem verbleibenden Schrankgehäuse dient und vor allem auch zur Stabilisierung dieses Gehäuses nach dem Abnehmen des alten Daches.

Dieser Adapter-Rahmen besitzt wiederum - bei etwa gleichen Abmessungen verschiedener Verteilerschrank-Gehäuse in der Aufsicht - die unterschiedlichen Befestigungsvorrichtungen, wie sie für unterschiedliche konstruktive Auslegung, vor allem der einzelnen Hersteller der Schränke, benötigt werden.

Auf den Adapter-Rahmen - der einstückig umlaufend oder mehrteilig aus Eckelementen und Seitenprofilen hergestellt sein kann - wird die obere Abdeckung des Dachmoduls aufgesetzt, die erst den zusätzlichen Innenraum im Inneren des Dachmoduls zur Verfügung stellt, da der Adapter-Rahmen selbst in der Regel nur eine geringe Bauhöhe, wie sie für die Anbringung der Befestigungsvorrichtungen nach unten zum verbleibenden Schrankgehäuse als auch nach oben zur oberen Abdeckung hin und für die ausreichende Stabilität notwendig ist, aufweist.

Auch die obere Abdeckung kann wiederum unterschiedlich gestaltet sein, nämlich als z. B. einstückige Haube, oder mehrteilig, z. B. aus einem umlaufenden Rahmen, der die Höhe des Dachmoduls bestimmt, und einem darauf aufgesetzten Dach. Das Dach wird in der Regel einstückig ausgebildet sein, jedoch sind auch hier unterschiedliche Varianten, vor allem unterschiedlich designte Varianten passend zum jeweiligen Design des restlichen Schrankgehäuses, denkbar.

Der umlaufende Distanz-Rahmen kann konstruktiv verschieden ausgebildet sein, nämlich beispielsweise als einstückig umlaufender Distanz-Rahmen oder als mehrteiliger Distanz-Rahmen.

In diesem Fall wiederum bestehend aus vertikal verlaufenden Kantenelementen, insbesondere Kantenprofilen, zwischen die Seitenwände montiert werden.

Unterschiedliche Grundflächenabmessungen des Dachmoduls können dann einfach durch verschiedene Längserstreckungen der Seitenwände erzielt werden, und unterschiedliche Höhen des Dachmoduls durch unterschiedlichen Höhen der Seitenwände und Längen und damit Höhen der Kantenelemente.

Ein Bausatz wird dementsprechend von jedem der Einzelteile unterschiedlich dimensionierte und gegebenenfalls auch unterschiedlich gestaltete Bauteile enthalten, die entsprechend kombiniert werden können.

Dabei wird der Adapter-Rahmen, sofern er als Einzelteil vorliegt, Befestigungsvorrichtungen nicht nur nach unten zu der Befestigung am Schrank-Gehäuse aufweisen, sondern auch nach oben hin, und dort vorzugsweise an immer gleichen Positionen, zur Befestigung der oberen Abdeckung.

Materialien, Bauform und auch konstruktive Gestaltung der Teile sind jedoch unterschiedlich je nach geplantem Einsatzzweck:

So können die Seitenwände des Distanz-Rahmens, vor allem wenn der Distanz-Rahmen aus Kantenelementen und separaten Seitenwänden zusammengesetzt ist, einzeln oder alle samt als Kiemenseitenwand ausgebildet sein, mit Lüftungsschlitzen, die nach unten außen offen sind, nach oben und zur Seite nach außen dagegen durch eine Art Bedachung gegen Eindringen von Regen etc. geschützt sind.

Die Kiemen-Seitenwand ist dabei vorzugsweise aus Blech mittels Prägen hergestellt.

Derartige Seitenwände werden verwendet, wenn das Dachmodul als passives Klimamodul eingesetzt wird.

Der vergrößerte Innenraum im Dachmodul bewirkt, dass die im Inneren des verbleibenden Schrank-Gehäuses erwärmte Luft weiter nach oben steigen kann, und damit im Bereich der elektrischen Elemente im Schrank-Gehäuse die Temperatur etwas geringer bleibt. Zusätzlich bieten die Seitenwände des Dachmoduls die Möglichkeit, viele Entlüftungsschlitze, eben in Form dieser Kiemen anzuordnen und dadurch die sich dort sammelnde Wärme vergleichsweise schnell abzuführen.

Aus dem gleichen Grund wird dabei der Schrank-Innenraum gegenüber dem Dachmodul-Innenraum möglichst wenig abgetrennt, vorzugsweise dabei der volle Durchgang belassen, um das Aufsteigen der Luft nicht zu behindern.

Wird das Dachmodul dagegen als Aufnahmemodul genutzt, in dem der Innenraum des Dachmoduls zum Unterbringen von, z. B. aktiven elektrischen Komponenten, benutzt werden soll, so wird eine der Seitenwände, insbesondere eine mit der größeren Längserstreckung, als Klappen-Seitenwand ausgeführt, was bedeutet, dass eine möglichst großflächig in dieser Seitenwand ausgebildete Klappe, Tür oder ähnliches aufweist.

Durch Öffnen der Tür oder Klappe oder gar vollständiges Entfernen wird der Innenraum des Dachmoduls zugänglich, und es kann die gewünschte Komponenten, beispielsweise ausgeführt als 19'-Einschub, durch die geöffnete Klappe oder Tür in den Innenraum des Dachmoduls eingeschoben werden. Zu diesem Zweck ist im Inneren ein entsprechendes Aufnahmegestell meist als Lochschienen und anderen Metallelementen vorhanden, welches mit den Innenflächen des Dachmoduls verschraubt ist.

Die Klappe oder Tür selbst in der Seitenwand des Dachmoduls ist wiederum durch ein Schloss gegen unbefugtes Öffnen gesichert.

Bei der Verwendung als Aufnahmemodul ist häufig auch ein Bodenblech im Dachmodul vorhanden, welches aus Gründen der EMV-Abschirmung meist aus Stahlblech besteht und mit der übrigen EMV-Abschirmung des restlichen Schrank-Gehäuses möglichst dicht verbunden ist bzw. auf diesem aufsitzt.

Bei einem separaten Adapter-Rahmen und darauf aufsitzenden oberer Abdeckungen kann dieses Bodenblech zwischen Adapter-Rahmen und oberer Abdeckung montiert sein. Bei einer einstückigen Dachmodul-Haube auf der Unterseite des Moduls, also zwischen restlichem Schrank-Gehäuse und dem neuen Dachmodul.

Für die Stromversorgung und gegebenenfalls auch Datenzufuhr oder Abfuhr ist weiterhin in diesem Bodenblech meist ein Kabeldurchlass, insbesondere ausgeführt als EMV-dichter Kabeldurchlass, vorhanden.

Hinsichtlich des Materials bestehen zumindest der Adapter-Rahmen, die Eckelemente des Distanz-Rahmens oder der insgesamt umlaufende einstückige Distanzrahmen und das Dach, bzw. die gesamte Haube aus Kunststoff in Form eines Kunststoff-Spritzgussteiles, was die Herstellung verbilligt. Darin können Befestigungselemente wie Muttern oder Bolzen eingegossen sein, zur leichteren Fixierung angrenzender Teile.

Die Einbauten, wie Aufnahme-Gestell etc. bestehen jedoch meist aus Metall aufgrund der höheren Stabilität unter Verwendung von kostengünstigeren beschaffbaren Normteilen.

Das Bodenblech wird in der Regel aus EMV-abschirmendem Metall, insbesondere Stahlblech bestehen.

Dagegen werden die vorzugsweise einzeln herzustellenden Seitenwände in Form von Kiemen-Seitenwänden oder Klappen-Seitenwänden vorzugsweise aus Blech bestehen, da sie dann einfach durch Prägen etc. herzustellen sind und - je nach dem Raster der Anordnung z. B. der Kiemen - sogar von größeren Flächen durch Sägen auf die gewünschten Maße zugeschnitten werden können.

Seitenwände ohne Spezialfunktion, die lediglich eine geschlossene Seitenfläche bilden sollen, werden dagegen vorzugsweise aus Kunststoffplatten hergestellt.

Wenn jedoch das Aufnahmemodul den speziellen Zweck als Antennenmodul erfüllen soll, also als aufzunehmende Komponente im Innenraum des Dachmoduls eine Antenne oder eine kombinierte Antennen-Empfängereinheit montiert werden soll, ist für den problemlosen Empfang bzw. Sendeleistung es zwingend notwendig, dass Umfangswände und obere Abdeckung, also Distanz-Rahmen und Dach bzw. die gesamte Haube aus Kunststoff ohne abschirmende Metallteile bestehen.

Ein darunter befindliches Bodenblech zur EMV-Trennung gegenüber dem Inneren des verbleibenden Schrank-Gehäuses ist zulässig und behindert die Abstrahlung nach oben und zur Seite nicht.

Jedoch wird ein Aufnahme-Gestell im Inneren, sofern es aus Metall bestehen muss, vom Volumen so gering wie möglich dimensioniert und vorzugsweise doch aus Kunststoff hergestellt sein.

Während bei der Verwendung als normales Aufnahmemodul, also für andere Komponenten als eine Antenne, zusätzlich zur Bodenplatte noch eine Oberplatte im Bereich zwischen Distanz-Rahmen und Dach angeordnet wird, die ebenfalls vorzugsweise aus EMV-dichten Material, also z. B. Blech, besteht und mit einer die übrigen Flächen abdeckenden EMV-Abschirmung entlang der Innenseiten des Distanz-Rahmens verbunden ist, ist derartiges bei der Verwendung als Antennen-Modul nicht vorhanden.

Ein solches Oberblech wird einfach am Distanz-Rahmen befestigt, mittels Einschubbolzen, z. B. Schrauben, die vertikal durch entsprechende Bohrungen in den Ecken der Oberplatte in entsprechende vertikale Öffnungen der Eckelemente des Distanz-Rahmens eingeschoben bzw. eingeschraubt werden, wodurch diese Kanten-Elemente gegeneinander gedrückt und der Distanz-Rahmen stabilisiert wird.

Der Ablauf einer Umrüstung ist in Anspruch 11 beschrieben.

Da das alte Dachmodul ebenso wie das neue Dachmodul über Verbindungselemente mit dem Rest des Schrankes verbunden ist, die nur vom Innenraum des verbleibenden Schrankes her gelöst werden können, wird zuvor die Tür des Schrank-Gehäuses geöffnet, um diese Zugänglichkeit zu erreichen und auf dem gleichen Wege das neue Dachmodul nach dem Aufsetzen zu befestigen.

Das Dachmodul wird vor dem Aufsetzen auf das Schrank-Gehäuse komplett vormontiert, insbesondere mit allen gewünschten Einbauten ausgestattet.

Vorzugsweise sind die Befestigungselemente zum restlichen Schrank-Gehäuse hin so ausgebildet, dass durch das Befestigen gleichzeitig ein Ausrichten des Dachmoduls gegenüber dem Schrank-Gehäuse geschieht und ein separater Arbeitsschritt hierfür entfällt.

Nach dem Befestigen des Dachmoduls werden die elektrischen leitenden Verbindungen vorgenommen, also gegebenenfalls das Erdungskabel am Innenausbau des Dachmoduls befestigt und die Strom- und/oder Datenversorgung des Dachmoduls sichergestellt, falls sich dort derartige Komponenten befinden.

### c) Ausführungsbeispiele

Ausführungsformen gemäß der Erfindung sind im Folgenden beispielhaft näher beschrieben. Es zeigen:
- Fig. 1:: den Umrüstablauf,
- Fig. 2:: ein passives Klimamodul in Explosionsdarstellung,
- Fig. 3:: ein Aufnahmemodul in der speziellen Bauform als Antennenmodul und
- Fig. 4:: ein allgemeines Aufnahmemodul.

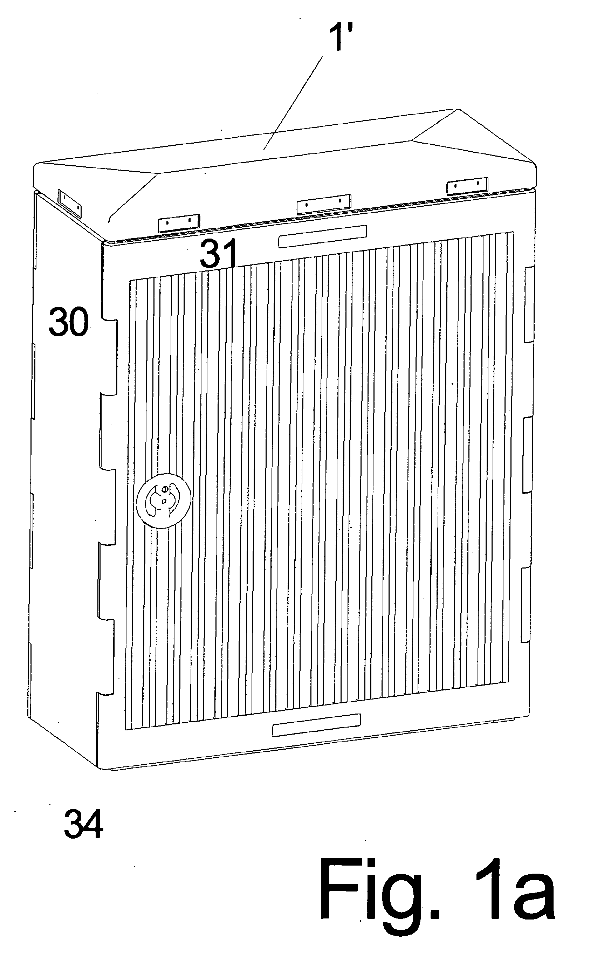

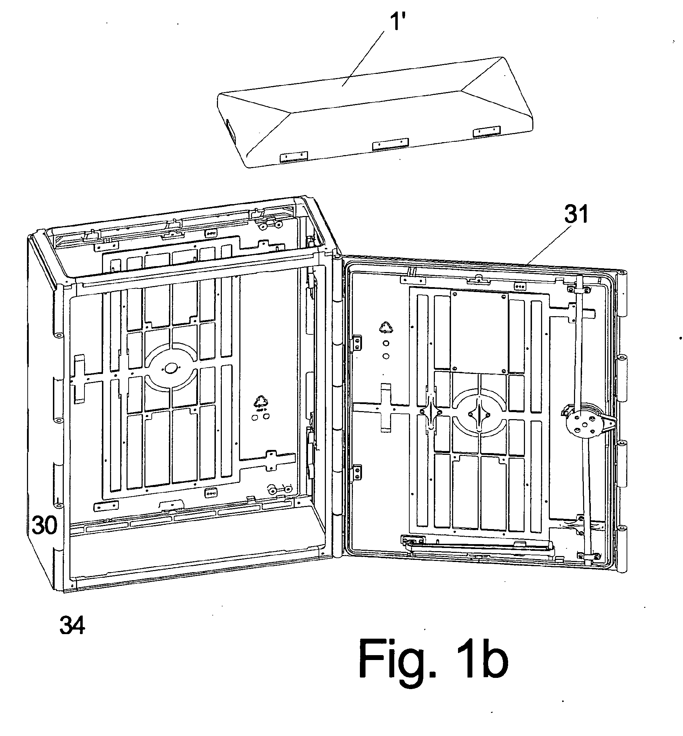

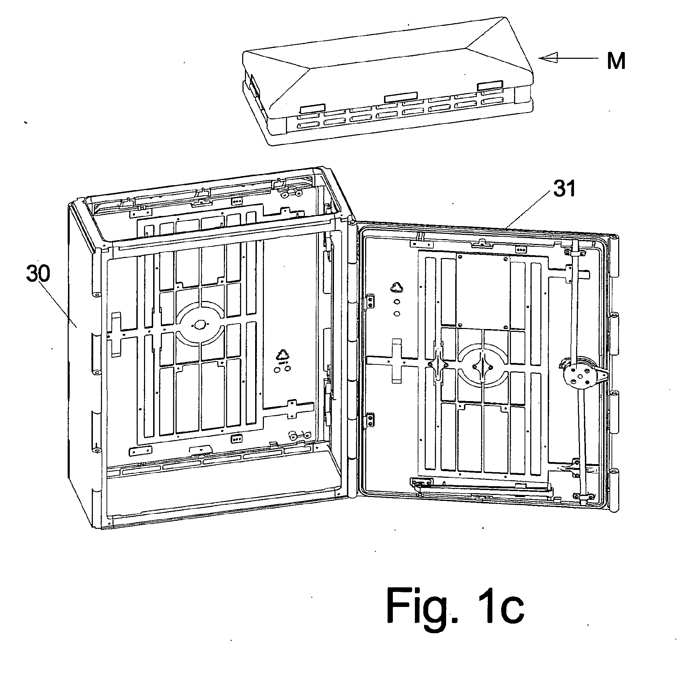

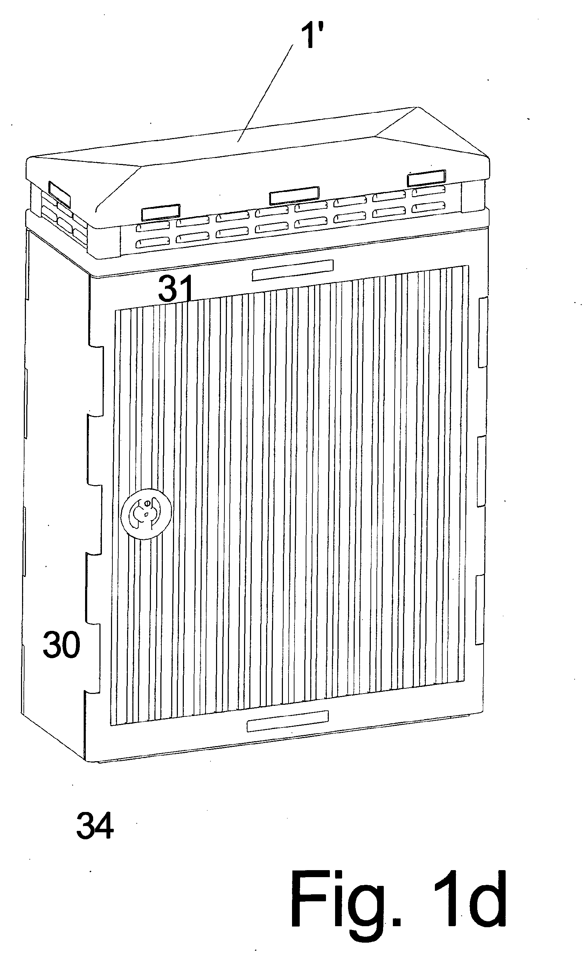

### Fig. 1 zeigt den Umrüstablauf eines vorhandenen Verteilerschrankes:

Gemäß Fig. 1a steht der Verteilerschrank, bestehend aus Schrankgehäuse 30 und dieses nach oben abschließendem ursprünglichen Dach 1', auf einem Sockel 34, und nimmt in seinem Inneren die notwendigen elektrischen Einbauten auf.

Die Umrüstung auf das neue Dachmodul 1 erfolgt so, dass - möglichst ohne Abschalten der elektrischen Ausstattungen im Inneren und damit ohne Betriebsunterbrechung - zunächst das alte Dach 1' abgenommen wird, wie in Fig. 1b dargestellt.

Dies erfolgt üblicherweise durch Lösen der entsprechenden Verriegelungen oder Verschraubungen vom Innenraum 33 des Schrankgehäuses 30 aus, wozu dessen Tür 31 zuvor geöffnet werden muss, da ein Lösen und Abheben des Daches 1' von außen, also durch Unberechtigte, vermieden werden soll.

Gleichzeitig oder vorher wird das neue Dachmodul M fertig vormontiert, beispielsweise aus mehreren Gehäuseteilen 1, 2, 5 und entsprechenden Einbauten, zusammen gebaut und in diesem fertig vormontierten Zustand von oben her auf das verbliebene Schrankgehäuse 30 aufgesetzt (Fig. 1 c).

Nach dem Ausrichten des Moduls M auf dem Gehäuse 30 werden beide fest miteinander verbunden, was vorzugsweise wieder vom Innenraum 33 des Schrankgehäuses 30 aus geschieht, dann gegebenenfalls die elektrische Verbindung und auch Erdung zwischen den Einbauten im Modul M und den Einbauten im verbliebenen Schrankgehäuse hergestellt. Nach dem Schließen der Tür 31 ist die Umrüstung abgeschlossen.

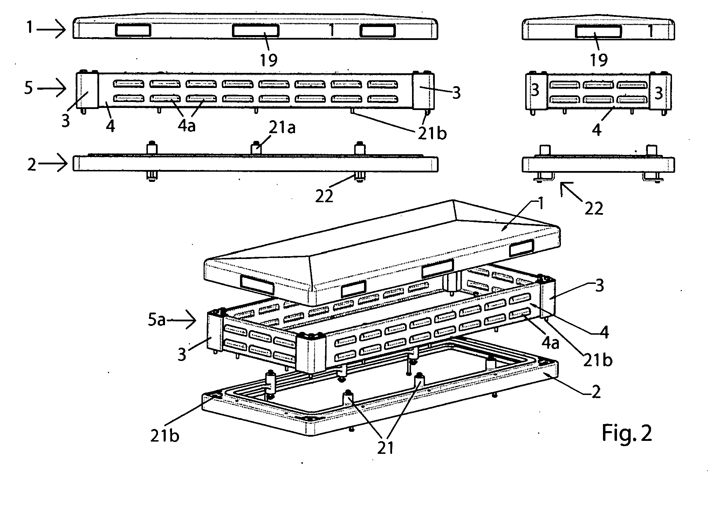

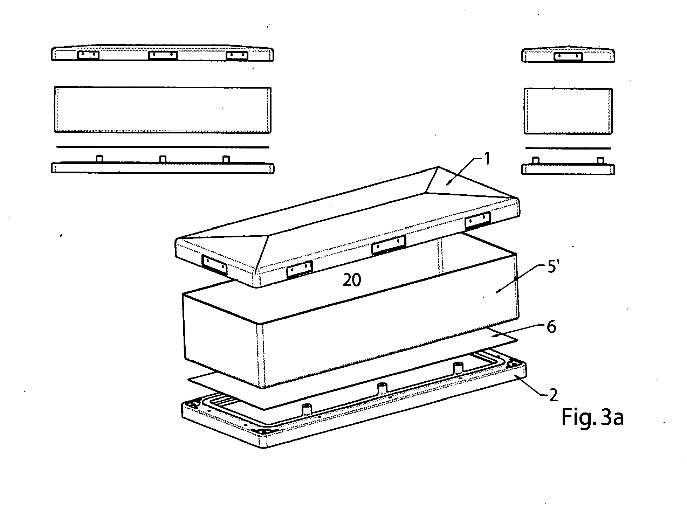

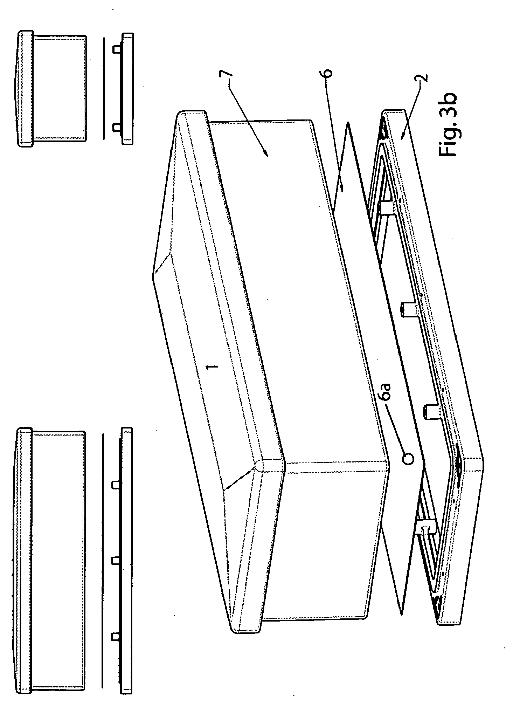

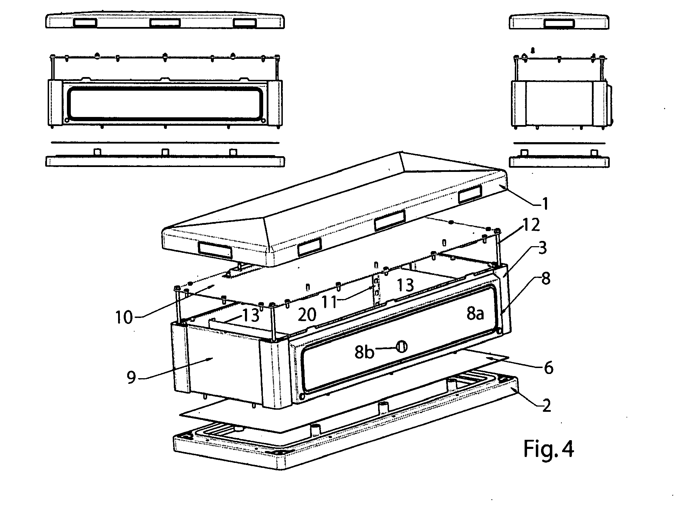

Die Fig. 2 - 4 zeigen jeweils in Explosionsdarstellung - sowohl perspektivisch als auch in den beiden Seitenansichten - von der Bauart her unterschiedliche Module M, nämlich beispielhaft ein passives Klimamodul in Fig. 2, ein allgemeines Aufnahmemodul in Fig. 4, ein spezielles Aufnahmemodul als Antennenmodul in den Fig. 3. Zusätzlich können die einzelnen Bauarten in verschiedenen Größen, also unterschiedlichen Höhen als auch unterschiedlichen Abmessungen in der Aufsicht erstellt werden, je nach Verfügbarkeit der Einzelteile des Bausatzes.

Zu diesem Zweck wird der Innenraum 20 des Moduls M möglichst leer bleibt.

Zunächst ist hinsichtlich des Modul-Gehäuses in Fig. 3b dargestellt, dass das Modul-Gehäuse aus dem Adapter-Rahmen 2 bestehen kann, auf dem beispielsweise eine einstückige Distanz-Haube 7, also enthalten sowohl die Umfangswände als auch das damit dicht verbundene, einstückige angeformte Dach 1, befestigt wird.

In den anderen Varianten der Fig. 2, 3a und 4 dagegen besteht - unabhängig von einem gleichen oder anders artigen Innenausbau - das Modul-Gehäuse dagegen jeweils von unten nach oben fortlaufend aus dem unteren Adapter-Rahmen 2, dem darauf aufsitzenden Distanz-Rahmen 5und dem wiederum darauf aufsitzenden Dach 1, die jeweils fest miteinander verbunden sind.

Die Module der Fig. 2, 3 und 4 sind nur in einer Größenabmessung dargestellt, können je nach Umfang des Bausatzes jedoch bei gleicher Bauart in unterschiedlichen Längen, Breiten und/oder vor allem Höhen zur Verfügung gestellt werden, je nach Verfügbarkeit der Einzelteile.

Der Adapater-Rahmen 2 weist dabei die auf den spezifisch nachzurüstenden Verteilerschrank hinsichtlich Position und Ausführungsform abgestimmten Befestigungsvorrichtungen 22, beispielsweise Schraubbuchsen, Klammern oder ähnliches auf, und zwar möglichst auf Befestigungsvorrichtungen für mehrere verschiedene, in der Aufsicht etwa gleich große, verschiedene Verteilerschränke hin.

Ansonsten besteht die Aufgabe des Adapter-Rahmens 2 darin, eine ausreichende Stabilität in der Horizontalen und auch Vertikalen sicherzustellen, um das obere offene Ende des verbleibenden Schranke-Gehäuses 30 ausreichend zu stabilisieren.

Des Weiteren weist der Adapter-Rahmen 2 meist zur Oberseite hin vorstehend weitere Befestigungsvorrichtungen 21a auf, zum Zusammenwirken mit Befestigungsvorrichtung 21 b an der Unterseite des darauf aufsitzenden Distanz-Rahmens 5.

Der Distanz-Rahmen 2 kann dabei einstückig umlaufend, z. B. als Spritzgussteil aus Kunststoff hergestellt sein, mit entsprechender Profilierung an seiner Unterseite zum Aufsitzen auf dem Schrank-Gehäuse 30 und auf der Oberseite zum dichten Anschluss des Distanz-Rahmens 5, oder der Rahmen 2 kann selbst wiederum mehrteilig ausgebildet sein, vorzugsweise dann unterteilt, in Eckelemente und die Seitenbildende Längselemente, so dass mit den immer gleichen Eckelementen und unterschiedlich lange Längselemente unterschiedliche Grundflächen des Rahmens 2 hergestellt werden können.

Gleiches gilt auch für den Distanzrahmen 5, der mit seiner Höhe im Wesentlichen die Höhe des Innenraumes 20 des Dachmoduls bestimmt, welcher für Einbauten zur Verfügung steht.

Während in Fig. 3a der Distanz-Rahmen 5 als einstückig umlaufender Distanz-Rahmen 5' ausgebildet ist, der beispielsweise ein auf die gewünschte vertikale Erstreckung abgelenkter Abschnitt eines Hohl-Profils ist oder auch einzeln als Spritzgussteil hergestellt sein kann, ist gemäß der Fig. 2 und 4 der Distanz-Rahmen 5 wiederum aus Einzelteilen, nämlich Kantenelementen 3 und diese verbindenden Seitenwänden, zusammengebaut.

Die Kanten-Elemente 3 sind dabei vorzugsweise im Querschnitt winkelförmig gestaltete Profile, die entweder einzeln angefertigt oder als abgelenkter Abschnitt eines endlosen Strangprofiles erzeugt werden.

Die Seitenwände werden ebenfalls entsprechend der gewünschten Höhe und Längserstreckung einzeln hergestellt oder aus entsprechendem Plattenmaterial zugeschnitten.

Das darauf aufsitzende Dach 1 ist in der Regel einstückig hergestellt und insbesondere als Kunststoff-Spritzgussteil.

Die verschiedenen Dächer 1 können sich entweder hinsichtlich ihrer Grundfläche und/oder hinsichtlich ihres Designs unterscheiden, was weder in der Fig. 2 noch der Fig. 4 erkennbar ist.

Der wesentliche Unterschied des Modul-Gehäuses der Fig. 2, 3 und 4 liegt - neben der unterschiedlichen Bauhöhe und damit der Höhe des Distanz-Rahmens 5 - in der unterschiedlichen Gestaltung der Seitenwände des Distanz-Rahmens 5 entsprechend dem jeweiligen Anwendungszweck.

In Fig. 2, welches die Ausprägung des Dachmoduls M als passives Klima-Modul zeigt, sind die Seitenwände als so genannte Kiemenwände 4 ausgebildet. Dabei sind in allen vier Seitenwände in der Regel rechteckigen Grundform des Schrank-Gehäuses 30 - ohne die Erfindung hierauf zu beschränken -, möglichst viele und großflächige kiemenförmige Öffnungen untergebracht, um Abwärme aus dem Innenraum 20 des Dachmoduls nach außen austreten zu lassen und damit das Innere des Verteilerschrankes zu kühlen.

Zu diesem Zweck ist auch keine Abtrennung sondern stattdessen ein freier Durchgang zwischen den Innenräumen 20 des Dachmoduls und dem Innenraum 33 des Schrankgehäuses 30 vorhanden, um die durch die elektrischen Einbauten im übrigen Schrankgehäuse erwärmte Luft in den Innenraum 20 des Dachmoduls aufsteigen und dort möglichst großflächig austreten zu lassen.

Die Kiemen 4a sind aus den in der Regel bestehenden Kiemen-Seitenwand 4 vorzugsweise durch Ausprägen erzeugt, so dass die in der Seitenwand 4 vorhandenen Schlitze zu den Seiten und nach oben durch die nach außen ausgeprägte, auf den Seiten und oben mit der übrigen Seitenwand noch dicht verbundenen, Blechflächen abgedeckt, und nur nach unten außen offen ist, so dass es nicht in die Schlitze hineinregnen kann. Die Kiemen-Seitenwände 4 können statt durch Prägen natürlich auch durch Spritzgießen aus Kunststoff hergestellt werden, jedoch ist der Aufwand dabei höher und eine Quasi-Endlos-Produktion entsprechender Flächen ist nicht möglich, sondern es müssen maßgenaue Seitenwände auf diese Art und Weise erstellt werden.

Im Gegensatz dazu sind Einzelteile wie Adapter-Rahmen 2, Kanten-Elemente 3, Dach 1 oder auch umlaufend geschlossen Seitenwände in Form eines einstückig umlaufenden Distanz-Rahmens 5 oder gar einer einstückigen Distanzhaube 7 vorzugsweise jeweils aus Kunststoff, insbesondere im in Spritzgussverfahren hergestellt bis auf darin untergebrachte metallene Verbindungselemente.

Während die Fig. 3 von der Form des Modul-Gehäuses durchgehend geschlossene Seitenwände zeigt, die dementsprechend ebenfalls aus Kunststoff bestehen können, zeigt Fig. 4 die Ausprägung als allgemeines Aufnahme Modul zur Aufnahme von elektrischen Einbauten im Innenraum 20 dieses Moduls:

Zum einen kann dabei - je nach Art der Einbauten - eine oder auch mehrere der Seitenwände als Klappen-Seitenwand 8 ausgebildet sein, die - vorzugsweise möglichst groß über die gesamte Fläche der Seitenwand erstreckt - eine Klappe 8a aufweist, die ohne Abnehmen des Dachmoduls von einem Berechtigten geöffnet werden kann, um die Einbauten im Inneren zu erreichen und daran Wartungsund gegebenenfalls auch Reparaturarbeiten durchzuführen oder diese Einbauten auszutauschen.

Anstelle einer z. B. über Gelenke entlang der Oberkante angeordneten, wirklichen Klappe 8a kann es sich dabei auch um eine seitlich angelehnte Tür oder um eine vollständig abzunehmende Klappe handeln. Vorzugsweise ist in allen Fällen der Zugang den berechtigten Personen vorbehalten, durch Anordnung eines Schlosses 8b in der Klappe 8a bzw. Tür.

Bei den Einbauten handelt es sich um elektrische Einbauten, beispielsweise in Form der bekannten 19"(Zoll) (1 Zoll = 2,54 cm). Einschübe, weshalb im Inneren also vor allem im Inneren des Distanz-Rahmens 6, ein entsprechendes Aufnahmegestell 13 montiert ist, in welches derartige Einschübe durch einfaches Einschieben durch die geöffnete Klappe 8a hineinbewegt und befestigt werden können.

Zusätzlich und/oder stattdessen sind vorzugsweise vertikal verlaufende Lochschienen 11 in den Randbereichen des Innenraumes 20 am Gehäuse des Moduls befestigt, die ebenfalls der Verschraubung von elektrischen Einbauten dienen.

Fig. 4 zeigt ferner die Anordnung einer Oberplatte 10, die in etwa die Grundfläche des Innenraumes 20 besitzt, auf der Oberseite des Distanz-Rahmens 5, insbesondere montiert zwischen Distanz-Rahmen 5 und Dach 1.

Die Befestigung erfolgt vorzugsweise mittels Einschubbolzen 12 oder Einschraubbolzen, die sich durch Bohrungen in den Ecken der Oberplatte 10 hindurch in entsprechende vertikale Bohrungen, insbesondere Durchgangsbohrungen, der Kanten-Elemente 3 erstrecken und dadurch einerseits die Oberplatte sicher gegenüber dem Distanz-Rahmen 5 fixieren und andererseits das Auseinanderbewegen der Eckelemente 3 relativ zueinander verhindern und damit die sichere Haltung der z. B. nur zwischen die Kanten-Elemente 3 in entsprechende Nuten eingesteckten Seitenwände sicherstellt.

Die Oberplatte 10 kann vorzugsweise aus EMV-abschirmenden Metallblech bestehen, falls eine EMV-Abstrahlung der in dem Modul montierten elektrischen Einbauten verhindert werden soll. In diesem Fall müssen natürlich auch der Distanz-Rahmen 5 EMV-abschirmend ausgeführt sein, beispielsweise in dem seine Seitenwände aus Metall bestehen und auch die Kanten-Elemente 3, oder jedenfalls eine entsprechende EMV-Beschichtung, z. B. auf der Innenseite, besitzen.

Fig. 4 zeigt ferner ein analog zur Oberplatte 10 ausgeführtes Bodenblech 6, welches ebenfalls aus EMV-abschirmenden Metallblech, zwischen Distanz-Rahmen 5 und Adapter-Rahmen 2 montiert ist, und ebenfalls eine hindurchgehende EMV-Abstrahlung verhindern soll.

Im Gegensatz zu der Lösung gemäß Fig. 4 ist in Fig. 3 das Dachmodul als spezifisches Aufnahmemodul zur Aufnahme eines auch eine Antenne umfassenden elektrischen Einbauteiles, beispielsweise eines kombinierten Antennen-/Empfängermoduls, ausgebildet.

Zum einen muss deshalb die EMV-Dichtigkeit des Innenraums 33 im restlichen Schrank-Gehäuse 30 und der dort untergebrachten elektrischen Komponenten sichergestellt werden, was durch Anordnung des EMV-abschirmenden Bodenbleches 6, vorzugsweise zwischen Adapter-Rahmen 2 und Distanz-Rahmen 5' oder der Distanzhaube 7 erreicht wird.

Zum anderen muss aus dem Innenraum 20 des Antennenmoduls heraus eine abschirmungsfreie Abstrahlung nach außen, also nach oben und zur Seite hin sichergestellt sein, weshalb zum einen das Distanzmoduls 5 - unabhängig von seiner Bauart - und ebenso das Dach 1 oder das beide repräsentierende einstückige Distanzhaube 7 aus einem Material bestehen muss, welches die Abstrahlung der Antenne, bzw. das Einstrahlen auf eine im Innenraum 20 untergebrachte Empfängereinheit behindert, also vorzugsweise aus Kunststoff.

Auch die am oder im Kunststoff verbauten Metallelemente müssen so gering und kleinflächig wie möglich gehalten werden, vorzugsweise sollten auf diese ganz verzichtet werden, insbesondere also auch auf ein Aufnahmegestell 13 und erst Recht auf eine Oberplatte 10 und/oder Lochschienen 11 et. aus Metall.

### BEZUGSZEICHENLISTE

- 1a, b: Dach
- 2a, b: Adapter-Rahmen
- 3: Kanten-Element
- 4: Kiemen-Seitenwand
- 4a: Kieme
- 5: Distanz-Rahmen
- 5': einstückig umlaufender Distanz-Rahmen
- 6: Bodenblech
- 6a: EMV-dichter Kabeldurchlass
- 7: Distanz-Haube
- 8: Klappen-Seitenwand
- 8a: Klappe
- 8b: Schloss
- 9: geschlossene Seitenwand
- 10: Oberplatte
- 11: Lochschiene
- 12: Einschubbolzen
- 13: Aufnahme-Gestell
- 19: Beschilderung
- 20: Innenraum
- 21: Befestigungsvorrichtung gegen obere Abdeckung
- 22: Befestigungsvorrichtung gegen Schrank
- 30: Schrankgehäuse
- 31: Schrank-Tür
- 32: offene Oberseite
- 33: Innenraum
- 34: Sockel
- M: Modul

## Patentansprüche

1. Dachmodul-Bausatz für bevorzugt im freien stehende, Elektro-Verteiler-Schränke, insbesondere Telekommunikations-Verteiler-Schränke, mit
- wenigstens einem Adapter-Rahmen (2) zum Befestigen auf der offenen Oberseite (32) eines Schrank-Gehäuses (30) und
- wenigstens einer oberen Abdeckung zum Aufsetzen und Befestigen auf dem Adapter-Rahmen (2),
**dadurch gekennzeichnet, dass**
ein Aufnahmegestell (13) im Innenraum (20) des Dachmoduls vorhanden ist, welches mit der oberen Abdeckung verbunden ist und der Aufnahme von elektrischen Einbauten in Form von 27,26 cm (19 Zoll)-Normeinschüben und/oder Antennen dient.

2. Bausatz nach Anspruch 1,
**dadurch gekennzeichnet, dass**
- der Adapter-Rahmen (2) Befestigungsvorrichtungen (21) passend für die Befestigung auf der offenen Oberseite (32) wenigstens einen Schrank-Gehäuses (30) aufweist, und/oder
- das Dachmodul eine obere Abdeckung und Befestigungsvorrichtungen (21) vorzugsweise im unteren Bereich des Dachmoduls passend für die Befestigung auf der offenen Oberseite (32) wenigstens eines Schrank-Gehäuses (30) aufweist, und/oder
- wenigstens das Dachmodul-Gehäuse einstückig und insbesondere aus Kunststoff ausgebildet ist.

3. Dachmodul-Bausatz bzw. Dachmodul nach einem der vorhergehenden Ansprüche,
**dadurch gekennzeichnet, dass**
- der Bausatz mehrere verschiedene Adapter-Rahmen (2a, b..) umfasst, von denen jeder zum Befestigen gegenüber wenigstens einem Schrank-Gehäuse dient, und/oder
- der Adapter-Rahmen (2a, b..) der Befestigungsvorrichtungen (21) umfasst, von denen jeder zum Befestigen gegenüber wenigstens einem Schrank-Gehäuse dient, und/oder
- die Adapter-Rahmen (2a, b..) eine unterschiedlich große Grundfläche, in der Aufsicht betrachtet, besitzen.

4. Dachmodul-Bausatz bzw. Dachmodul nach einem der vorhergehenden Ansprüche,
**dadurch gekennzeichnet, dass**
- die Adapter-Rahmen (2a, b..) die gleiche Art von Befestigungsvorrichtungen (21) zum Befestigen der oberen Abdeckung, und insbesondere an immer gleichen Positionen, insbesondere auf der Oberseite des Adapter-Rahmens (2a, b..), aufweisen, und/oder
- der Adapter-Rahmen (2a, b..) eine einstückig umlaufender Rahmen (2) ist oder aus Eckelementen und damit verbundenen Längsprofilen zusammengesetzt ist, und/oder
- die obere Abdeckung als einstückige Distanz-Haube (7) ausgebildet ist und der Bausatz insbesondere mehrere Distanzhauben (7a, b), insbesondere mit unterschiedlicher Höhe oder unterschiedlicher Grundfläche, aufweist.

5. Dachmodul-Bausatz bzw. Dachmodul nach einem der vorhergehenden Ansprüche,
**dadurch gekennzeichnet, dass**
die obere Abdeckung mehrteilig, insbesondere aus wenigstens einem Dach (1) und wenigstens einem das Dach (1) mit dem Adapter-Rahmen (2) verbindenden Distanz-Rahmen (5) zusammengesetzt ist, wobei der Bausatz insbesondere
- mehrerer Dächer (1 a, b..), insbesondere mehrere unterschiedliche gestaltete und/oder in ihrer Grundfläche unterschiedliche Dächer (1 a, b..) aufweist und/oder mehrere, insbesondere in ihrer Grundfläche unterschiedliche große und/oder
- mehrere unterschiedliche, insbesondere verschieden hohe oder in ihrer Grundfläche verschieden große Distanz-Rahmen (5), umfasst.

6. Dachmodul-Bausatz bzw. Dachmodul nach Anspruch 5,
**dadurch gekennzeichnet, dass**
- die Distanz-Rahmen (5) einstückig umlaufende Distanz-Rahmen sind, und/oder
- der Distanz-Rahmen (5) mehrteilig ausgebildet ist, insbesondere zusammengesetzt ist aus vertikal verlaufenden Kanten-Elementen (3), insbesondere Kanten-Profilen, und damit verbundenen Seitenwänden, und der Bausatz mehrere verschiedene, insbesondere verschieden lange, also hohe, KantenElemente (3) und/oder mehrere verschiedene, insbesondere verschieden hohe, Seitenwände umfasst, und/oder
- der bzw. die Adapter-Rahmen (2), einstückige Distanzhaube (7), einstückig umlaufender Distanzrahmen (5), Eckelemente (3) bzw. Eckprofile (3) und/oder Dach (1) zumindest im Wesentlichen aus Kunststoff bestehen, insbesondere hergestellt als Kunststoff-Spritzteil, gegebenenfalls mit daran befestigten, insbesondere darin eingespritzten Metallteilen wie Buchsen, Muttern oder Stehbolzen bzw. Gewindebolzen.

7. Dachmodul-Bausatz bzw. Dachmodul nach Anspruch 6,
**dadurch gekennzeichnet, dass**
- wenigstens eine der Seitenwände, insbesondere der als Einzelteil mit Kantenelementen (3) verbundenen Seitenwände, als Kiemen-Seitenwand (4) ausgebildet ist mit nach außen unten offenen Kiemen (4a) in der Seitenwand, die gegen Eindringen von z. B. Regen nach oben und zu den Seiten hin verschlossen sind, wobei die Kiemen - Seitenwand (4) vorzugsweise aus Blech mittels prägen hergestellt ist, und/oder
- von den Seitenwänden, insbesondere den als Einzelteil mit den Kantenelementen (3) verbunden Seitenwänden, wenigstens eine Seitenwand, insbesondere die Seitenwand mit der größten Längserstreckung, als Klappen-Seitenwand (8) mit einer möglichst großflächig in den Seitenwand (8) ausgebildeten öffenbaren Klappe (8a) oder einer analogen zu öffnenden oder abzunehmenden Tür ausgestattet ist, und/oder
- die Klappe (8a) oder Tür durch ein Schloss (8b) gesichert ist.

8. Dachmodul-Bausatz bzw. Dachmodul nach einem der vorhergehenden Ansprüche,
**dadurch gekennzeichnet, dass**
- bei einem Dachmodul mit Kiemen-Seitenwänden (4) der Innenraum (20) des Dachmoduls offen ist, gegenüber dem Innenraum (33) im restlichen Schrank-Gehäuse (30), und/oder
- ein Bodenblech (6) vorhanden ist zum Abtrennen, insbesondere EMV-Dichten abtrennen des Innenraumes (20) des Dachmoduls gegenüber den Innenraum (33) des restlichen Schrankes (30) und das Bodenblech (6) im unteren Bereich des Dachmoduls, insbesondere an der Unterseite des Dachmoduls oder zwischen Adapter-Rahmen (2) und oberer Abdeckung des Dachmoduls angeordnet ist und der Bausatz insbesondere mehrere verschiedene, insbesondere in ihrer Grundfläche verschieden große Bodenbleche (6) umfasst, und/oder
- das Bodenblech (6) wenigstens einen Kabeldurchlass, insbesondere einen EMV-dichten Kabeldurchlass (6a), aufweist.

9. Dachmodul-Bausatz bzw. Dachmodul nach einem der Ansprüche 7 oder 8, **dadurch gekeennzeichnet, dass**
- die Seitenwände, insbesondere die einzelnen hergestellten und mit den Kantenelementen (3) zu verbindenden, Seitenwände als einstückige, geschlossene Seitenwände (9), insbesondere aus Kunststoff-Platten bestehend und auf Maß zugeschnitten ausgebildet sind und der Bausatz, insbesondere mehrere in der Längserstreckung unterschiedliche bzw. mehrere unterschiedliche hohe, geschossene Seitenwände (9) aufweist, und/oder
- das Aufnahmegestell (13) mit der oberen Abdeckung, insbesondere dem ein oder mehrteiligen Distanz-Rahmen (5) verbunden, insbesondere verschraubt istund der Aufnahme von Einbauten, insbesondere Antennen, insbesondere Mobilfunk-Antennen oder Antennen-Empfänger-Kombinationen für Datendienste, dient, und/oder
- das Aufnahmegestell (13) einen Befestigungsbolzen für einen Erdungsanschluss aufweist.

10. Dachmodul-Bausatz bzw. Dachmodul nach einem der vorhergehenden Ansprüche,
**dadurch gekennzeichnet, dass**
- im Innenraum (20) eine Oberplatte (10) horizontal wie das Bodenblech (6) und insbesondere die gesamte Grundfläche überspannend, insbesondere zwischen dem Distanz-Rahmen (5) und dem Dach (1) angeordnet ist und der Bausatz insbesondere mehrere verschiedene, insbesondere in der Grundfläche verschieden große, Oberplatten (10) umfasst, und/oder insbesondere
- die Oberplatte (10) mittels Einschubbolzen (12) in entsprechenden Öffnungen, insbesondere Durchgangsöffnungen, in den Ecken der Kantenelemente (3) befestigt ist, und/oder
- Lochschienen (11), insbesondere vertikal verlaufend, in den Innenraum (20) vorhanden sind zur Befestigung der elektrischen Einbauten, und die Lochschienen (11) mit der Oberplatte (10) und/oder dem Aufnahmegestell (13) verbunden sind, insbesondere Oberplatte (10) und/oder Lochschienen (11) Bestandteil des Aufnahmegestells (13) und insbesondere mit diesem verbunden sind, und/oder
- das Bodenblech (6), die Oberplatte (10), die Lochschienen (11) und/oder die Einschubbolzen (12) und/oder die Klappe (8a) aus Metall bestehen.

11. Verfahren zum Nachrüsten eines Elektro-Verteiler-Schrankes mit einem Klima-Dachmodul oder einem Antennen-Dachmodul,
**dadurch gekennzeichnet, dass**
folgende Schritte:
- Lösen der Verbindungs-Elemente des alten Daches vom restlichen Schrank-Gehäuse,
- Abnehmen des alten Daches,
- Aufsetzen des neuen, komplett vormontierten und mit den neuen Komponenten ausgestatteten Dachmoduls auf der offenen Oberseite des Schrank-Gehäuses, wobei das Dachmodul mit elektrischen Einbauten in Form von 27,26 cm (19 Zoll)-Normeinschüben und/oder Antennen ausgestattet wird.
- Ausrichten des neuen Dachmoduls relativ zum verbliebenen Schrank-Gehäuse,
- Befestigen des Dachmoduls auf dem restlichen Gehäuse.

12. Verfahren nach Verfahrensanspruch 11,
**dadurch gekennzeichnet, dass**
- vor dem Lösen der Verbindungen des alten Daches die wenigstens eine Tür des Schrank-Gehäuses geöffnet wird und das Lösen der Verbindungselemente durch die offene Tür vom Inneren des Verteilerschrankes her erfolgt und umgekehrt die Befestigung des neuen Dachmoduls durch die offene Tür hindurch vom Inneren des Verteilerschrankes her erfolgt, und/oder
- vor dem Aufsetzen des neuen Dachmoduls das Dachmodul mit allen gewünschten Einbauten ausgestattet und komplett vormontiert wird, und/oder
- das Ausrichten des Dachmoduls automatisch durch das Verbinden der Befestigungsvorrichtungen des Dachmoduls gegenüber dem restlichen Schrank-Gehäuse geschieht.

13. Verfahren nach einem der vorhergehenden Verfahrensansprüche, **dadurch gekennzeichnet, dass**
- vor oder nach dem Befestigen des neuen Dachmoduls eine Erdung des Dachmoduls mit der beerdeten Innenausstattung des restlichen Schrank-Gehäuses erfolgt, und/oder
- vor oder nach dem Befestigen des Dachmoduls der im Inneren des Dachmoduls angeordneten elektrischen Komponenten mit der Energie- und/oder Datenversorgung im Inneren des restlichen Schrank-Gehäuses erfolgt, und/oder
- die Vormontage des neuen Dachmoduls erfolgt,
- durch Auswahl des zu dem nachzurüstenden Schrank-Gehäuse passenden Adapterrahmens,
- Verbindung des Adapterrahmens mit der oberen Abdeckung und
- gegebenenfalls Einbau der gewünschten Ausstattungskomponenten, insbesondere einer Antenne, in den Innenraum des Dachmoduls.

14. Verfahren nach einem der vorhergehenden Verfahrensansprüche,
**dadurch gekennzeichnet, dass**
- die Innenausstattung, insbesondere die Antenne, in den Innenraum (20) der oberen Abdeckung montiert wird, vor der Befestigung des Adapterrahmens an der oberen Abdeckung, und/oder
- vor der Befestigung des Adapterrahmens an der oberen Abdeckung ein Bodenblech (6) am Adapterrahmen (2) montiert wird, welches später den Innenraum des Schrank-Gehäuses EMV-Dicht nach oben abschließt, und/oder
- das Bodenblech (6) zwischen Adapterrahmen (2) und oberer Abdeckung montiert wird.

15. Verfahren nach Anspruch 14,
**dadurch gekennzeichnet, dass**
- vor dem Befestigen des Bodenbleches (6) ein zu den elektrischen Ausstattungen des Dachmoduls führendes Kabel durch einen EMV-Dichten Kabeldurchlass (6a) im Bodenblech (6) hindurchgeführt wird, und/oder
- vor der Montage der elektrischen Innenausstattung ein Innenraum (20) der oberen Abdeckung ein Aufnahmegestell (13) im Inneren der oberen Abdeckung hierfür montiert wird.

## Claims

1. A roof module kit, advantageously for outdoor electrical distribution cabinets, in particular telecommunications distribution cabinets, comprising:
- at least one adapter frame (2) for attachment on an open top side (32) of a cabinet housing (30) and
- at least one upper cover for applying and attaching on the adapter frame (2),
**characterized in that**
a receiving frame (13) is provided in an interior (20) of the roof module which is connected with the upper cover and used for receiving electrical installations in the form of 19 inch (27.26 cm) standard inserts and/or antennas.

2. The kit according to claim 1,
**characterized in that**,
- the adapter frame (2) includes attachment devices (21) that are configured for attachment on the open top side (32) of the at least one cabinet housing (30) and/or
- the roof module includes an upper cover and attachment devices (21) advantageously in a lower portion of the roof module configured for attachment on the open top side (32) of at least one cabinet housing (30) and/or
- at least the roof module housing is configured integrally in one piece and particularly made from plastic material.

3. The roof module kit or the roof module according to one of the preceding claims,
**characterized in that,**
- the kit includes plural different adapter frames (2a, b...), wherein each adapter frame is used for fixating relative to at least one cabinet housing and/or
- the adapter frame (2a, b) includes attachment devices (21), wherein each of the attachment devices is used for attaching relative to at least one cabinet housing and/or
- the adapter frames (2a, b) have a differently sized base surface in top view.

4. The roof module kit or the roof module according to one of the preceding claims,
**characterized in that,**
- the adapter frames (2a, b...) include the same type of attachment devices (21) for attaching the upper cover and in particular at identical positions in particular on the surface of the adapter frames (2a, b...) and/or
- the adapter frame (2a, b...) is a one piece circumferential frame (2) or assembled from corner elements and longitudinal profiles connected therewith and/or
- the upper cover is configured as a one piece spacer hood (7) and the kit includes in particular plural spacer hoods (7a, b), in particular with different height or different base surface.

5. The roof module kit or the roof module according to one of the preceding claims,
**characterized in that**,
the upper cover is assembled from plural components, in particular from at least one roof (1) and at least one spacer frame (5) connecting the roof (1) with the adapter frame (2), wherein the kit in particular
- includes plural roofs (1 a, b), in particular plural differently configured roofs (1 a, b..) or roofs with different base surfaces and/or plural roofs with different base surfaces, and/or
- plural spacer frames (5) that have in particular a different height or a different base surface.

6. The roof module kit or the roof module according to claim 5, **characterized in that**
- the spacer frames (5) are one-piece circumferential spacer frames and/or
- the spacer frames (5) are configured in plural components, in particular assembled from vertically extending edge elements (3), in particular edge profiles and sidewalls connected therewith and the kit includes plural different, in particular different length, thus different height edge elements (3) and/or plural different, in particular different height side walls and/or
- the spacer frame or the spacer frames (2), the one piece spacer hood (7), the one-piece circumferential spacer frame (5), the corner elements (3) or the corner profiles (3) and/or the roof (1) are at least essentially made from plastic material, in particular produced as a plastic injection molded components, optionally with metal components like bushings, nuts or studs or threaded studs attached thereto, in particular integrally molded therewith.

7. The roof module kit or the roof module according to claim 6,
**characterized in that**
- at least one of the sidewalls, in particular one of the sidewalls configured as an individual component and connected with edge elements (3) is configured as a gill sidewall (4) with gills that are open to the outside and in downward direction in the sidewall, wherein the gills are closed against penetration of rain in upward direction and to the sides, wherein the gill sidewall (4) is advantageously produced from sheet metal through embossing, and/or
- out of the sidewalls, in particular the sidewalls connected with the edge elements (3), at least one sidewall, in particular the sidewall with the greatest longitudinal extension, is configured as a flap sidewall (8) with an openable flap (8a) which has the largest possible surface in the sidewall (8), or a door that works analogously thereto and which can be opened or removed, and/or
- the flap (8a) or the door is secured by a lock (8b).

8. The roof module kit or the roof module according to one of the preceding claims,
**characterized in that**
- in a roof module with gill sidewalls (4) the inner cavity (20) of the roof module is open relative to the inner cavity (33) in the remaining closet housing (30), and/or
- a base plate (6) is provided for separating, in particular EMV - tight separating of the inner cavity (20) of the roof module relative to the inner cavity (33) of the remaining closet (30) and the base plate (6) is arranged in a lower portion of the roof module, in particular at the bottom side of the roof module or between the adapter frame (2) and the upper cover of the roof module and the kit includes in particular plural different base plates, in particular base plates (6) with different base surfaces, and/or
- the base plate (6) includes at least one cable pass through, in particular an EMV - tight cable parsed through (6a).

9. The roof module kit or the roof module according to one of the claims 7 or 8,
**characterized in that**
- the sidewalls, in particular the individually produced sidewalls that are to be connected with the edge elements (3) are configured as one-piece closed sidewalls (9) and are in particular made from plastic plates and cut to size and the kit includes in particular plural sidewalls (9) that have different longitudinal extensions or it includes plural sidewalls (9) with different heights that are closed and/or
- the receiving frame (13) is connected with the upper cover, in particular the one-piece or plural piece spacer frame (5), in particular bolted together and/or is used for receiving installations, in particular antennas, in particular mobile radio antennas or antenna receiver combinations for data services, and/or
- the receiving frame (13) includes an attachment bolt for a ground connection.

10. The roof module kit or the roof module according to one of the preceding claims,
**characterized in that**
- in the inner cavity (20) an upper plate (10) is arranged horizontally like the base plate (6) and in particular so that it extends over the entire base surface, in particular between the spacer frame (5) and the roof (1) and the kit includes in particular plural different top plates (10), wherein the top plates are different in particular with respect to their base surface, and/or in particular
- the top plate (10) is attached through insert bolts (12) in respective openings, in particular pass through openings in corners of the edge elements (3), and/or
- perforated rails (11), in particular vertically extending into the interior cavity (20) are provided for attaching the electrical installations, and the perforated rails (11) are connected with the top plate (10) and/or the receiving frame (13), in particular the top plate (10) and/or the perforated rails (11) are part of the receiving frame (13) and are in particular connected with the receiving frame, and/or
- the base plate (6), the top plate (10), the perforated rails (11) and/or the insert bolts (12) and/or the flap (8a) are made from metal.

11. A method for retrofitting an electrical distribution cabinet with a climate roof module and an antenna roof module,
**characterized by** the steps:
- disengaging the connection elements of the old roof from the remaining cabinet housing,
- removing the old roof,
- applying the new roof module that is completely preassembled and configured with the new components on an open topside of the roof housing, wherein the roof module is configured with electrical installations configured as 19 inch (27.26 cm) standard inserts and/or antennas.
- aligning the new roof module with the remaining cabinet housing
- attaching the roof module on the remaining cabinet housing.

12. The method according to method claim 11,
**characterized in that**
- before disengaging the connections of the old roof the at least one door of the cabinet housing is opened and disengaging the connection elements is performed through the open door from an interior of the distribution cabinet and vice versa the attachment of the new roof module is performed through the open door from an interior of the distribution cabinet, and/or
- before applying the new roof module the roof module is configured with all desired installations and completely preassembled, and/or
- aligning the roof module is performed automatically by connecting the connecting devices of the roof module with the remaining cabinet housing.

13. The method according to one of the preceding method claims, **characterized in that**
- before or after attaching the new roof module a grounding of the roof module is performed with the grounded interior equipment of the remaining cabinet housing, and/or
- before or after attaching the roof module the electrical components with energy and/or data supply are attached in the interior of the remaining cabinet housing, and/or
- the pre-assembly of the new roof module is performed,
- through selecting the adapter frame that fits with the cabinet housing that has to be retrofitted,
- connecting the adapter frame with the upper cover, and
- optionally installing the desired equipment components, in particular an antenna in the interior of the roof module.

14. The method according to one of the preceding method claims, **characterized in that**
- the interior equipment, in particular the antenna is mounted into the inner cavity (20) of the upper cover before attaching the adapter frame at the upper cover, and/or
- before attaching the adapter frame at the upper cover a base plate (6) is mounted at the adapter frame (2), wherein the base plate subsequently closes the inner cavity of the cabinet housing EMV tight in upward direction, and/or
- the base plate (6) is mounted between the adapter frame (2) and the upper cover.

15. The method according to claim 14,
**characterized in that**
- before attaching the base plate (6) a cable leading to the electrical equipment of the roof module is run through an EMV tight cable pass through (6a) in the base plate (6), and/or
- before mounting the electrical interior equipment in the inner cavity (20) a receiving frame (13) for the electrical interior equipment is mounted in the inner cavity of the upper cover.

## Revendications

1. Jeu de pièces de module de toit pour armoires de distribution électrique installées à l'air libre, en particulier pour armoires de distribution de télécommunications, comprenant:
- au moins un cadre d'adaptation (2) pour fixer sur la face supérieure ouverte (32) d'un boîtier d'armoire (30) et
- au moins un couvercle supérieur pour poser et fixer sur le cadre d'adaptation (2),
**caractérisé en ce que**:
il y a dans l'espace interne (20) du module de toit un bâti récepteur (13) qui est relié au couvercle supérieur et sert à recevoir des composants électriques sous la forme de tiroirs standard de 27,26 cm (19 pouces) et/ou d'antennes.

2. Jeu de pièces selon la revendication 1,
**caractérisé en ce que** :
- le cadre d'adaptation (2) présente des dispositifs de fixation (21) convenant à la fixation sur la face supérieure ouverte (32) d'au moins un boîtier d'armoire (30), et/ou
- le module de toit présente un couvercle supérieur et des dispositifs de fixation (21) de préférence dans la zone inférieure du module de toit convenant à la fixation sur la face supérieure ouverte (32) d'au moins un boîtier d'armoire (30), et/ou
- au moins le boîtier de module de toit est formé d'une seule pièce et est constitué en particulier de matière plastique.

3. Jeu de pièces de module de toit ou module de toit selon l'une quelconque des revendications précédentes,
**caractérisé en ce que**:
- le jeu de pièces comprend plusieurs cadres d'adaptation différents (2a, b...), dont chacun sert à la fixation vis-à-vis d'au moins un boîtier d'armoire, et/ou
- le cadre d'adaptation (2a, b...) comprend des dispositifs de fixation (21), dont chacun sert à la fixation vis-à-vis d'au moins un boîtier d'armoire, et/ou
- les cadres d'adaptation (2a, b...) possèdent une surface de base de grandeur différente observée en vue en plan.

4. Jeu de pièces de module de toit ou module de toit selon l'une quelconque des revendications précédentes,
**caractérisé en ce que**:
- les cadres d'adaptation (2a, b...) présentent le même type de dispositifs de fixation (21) pour fixer le couvercle supérieur et, en particulier, dans des positions toujours égales, en particulier sur la face supérieure du cadre d'adaptation (2a, b...), et/ou
- le cadre d'adaptation (2a, b...) est un cadre périphérique d'une seule pièce ou est composé d'éléments d'angle et de profilés longitudinaux qui leur sont reliés, et/ou
- le couvercle supérieur est conformé en capot d'écartement d'une seule pièce (7) et le jeu de pièces comprend en particulier plusieurs capots d'écartement (7a, b), en particulier de hauteur différente ou de surface de base différente.

5. Jeu de pièces de module de toit ou module de toit selon l'une quelconque des revendications précédentes,
**caractérisé en ce que**:
le couvercle supérieur est composé de plusieurs pièces, en particulier d'au moins un toit (1) et d'au moins un cadre d'écartement (5) reliant le toit (1) au cadre d'adaptation (2), dans lequel le jeu de pièces comprend en particulier:
- plusieurs toits (1a, b...), en particulier plusieurs toits conformés différemment et/ou de surface de base différente et/ou plusieurs toits (1 a, b...) en particulier de grandeur différente en matière de surface de base, et/ou
- plusieurs cadres d'écartement différents (5), en particulier de hauteur différente ou de grandeur de surface de base différente.

6. Jeu de pièces de module de toit ou module de toit selon la revendication 5,
**caractérisé en ce que**:
- les cadres d'écartement (5) sont des cadres d'écartement périphériques d'une seule pièce, et/ou
- le cadre d'écartement (5) est conformé en plusieurs pièces, en particulier composé d'éléments de bord (3) s'étendant verticalement, en particulier de profilés de bord, et de parois latérales qui leur sont reliées, et le jeu de pièces comprend plusieurs éléments de bord (3) différents, en particulier de longueur, donc de hauteur différente et/ou plusieurs parois latérales différentes, en particulier de hauteur différente, et/ou
- le ou les cadres d'adaptation (2), le capot d'écartement d'une seule pièce (7), le cadre d'écartement périphérique d'une seule pièce (5), les éléments d'angle (3) ou les profilés d'angle (3) et/ou le toit (1) sont au moins sensiblement formés d'une matière plastique, en particulier d'une pièce en matière plastique moulée par injection, éventuellement avec des pièces métalliques qui y sont fixées, en particulier qui y sont injectées, notamment des douilles, des écrous ou des boulons d'écartement, voire des boulons filetés.

7. Jeu de pièces de module de toit ou module de toit selon la revendication 6,
**caractérisé en ce que**:
- au moins l'une des parois latérales, en particulier celle reliée d'une pièce aux éléments de bord (3), est conformée en paroi latérale à opercules (4) avec des opercules (4a) ouverts vers l'extérieur et dans le bas dans la paroi latérale, qui sont fermés vers le haut et vers les côtés pour lutter contre la pénétration, par exemple, de pluie, dans lequel la paroi latérale à opercules (4) est de préférence fabriquée en tôle par estampage, et/ou
- parmi les parois latérales, en particulier parmi les parois latérales reliées aux éléments de bord (3) d'une seule pièce, au moins une paroi latérale, en particulier la paroi latérale de plus grande extension en longueur est conformée en paroi latérale à volet (8) avec un volet ouvrable (8a) conformé dans la paroi latérale (8) à surface la plus grande possible ou en porte analogue s'ouvrant ou se fermant, et/ou
- le volet (8a) ou la porte est protégé(e) par une serrure (8b).

8. Jeu de pièces de module de toit ou module de toit selon l'une quelconque des revendications précédentes,
**caractérisé en ce que**:
- dans un module de toit avec des parois latérales à opercules (4), l'espace interne (20) du module de toit est ouvert, en regard de l'espace interne (33) du boîtier d'armoire (30), et/ou
- une tôle de fond (6) est présente pour séparer, en particulier pour protéger à l'égard du parasitage électromagnétique (PEM) l'espace interne (20) du module de toit vis-à-vis de l'espace interne (33) de l'armoire restante (30) et la tôle de fond (6) est aménagée dans la zone inférieure du module de toit, en particulier sur la face inférieure du module de toit entre le cadre d'adaptation (2) et le couvercle supérieur du module de toit, et le jeu de pièces comprend en particulier plusieurs tôles de fond (6) de différentes grandeurs de leur surface de base, et/ou
- la tôle de fond (6) présente au moins un passage de câbles, en particulier un passage de câbles (6a) protégé contre le PEM.

9. Jeu de pièces de module de toit ou module de toit selon l'une quelconque des revendications 7 ou 8,
**caractérisé en ce que**:
- les parois latérales, en particulier les parois latérales fabriquées individuellement et à relier aux éléments de bord (3) se présentent sous la forme de parois latérales (9) fermées d'une seule pièce, en particulier constituées de plaques de matière plastique découpées sur mesure et le jeu de pièces présente en particulier plusieurs parois latérales fermées (9) d'extension longitudinale différente ou de hauteur différente, et/ou
- le bâti récepteur (13) est relié au couvercle supérieur, en particulier aux un ou plusieurs cadres d'écartement (5), en particulier vissés, et la réception de composants, en particulier d'antennes, notamment des antennes radio mobiles ou des combinaisons antenne-récepteur pour services de données, et/ou
- le bâti récepteur (13) présente un boulon de fixation pour une prise à la terre.

10. Jeu de pièces de module de toit ou module de toit selon l'une quelconque des revendications précédentes,
**caractérisé en ce que**:
- dans l'espace interne (20) est aménagée une plaque supérieure (10) horizontalement comme la tôle de fond (6) et couvrant en particulier toute la surface de base, en particulier entre le cadre d'écartement (5) et le toit (1) et le jeu de pièces comprend en particulier plusieurs plaques supérieures (10) différentes, en particulier de surface de base de grandeur différente, et/ou
- la plaque supérieure (10) est fixée au moyen de boulons enfichables (12) dans des ouvertures correspondantes, en particulier des ouvertures de passage, dans les coins des éléments de bord (3), et/ou
- des rails perforés (11), en particulier s'étendant verticalement, sont prévus dans l'espace interne (20) pour fixer les composants électriques et les rails perforés (11) sont reliés à la plaque supérieure (10) et/ou au bâti récepteur (13), en particulier la plaque supérieure (10) et/ou les rails perforés (11) font partie du bâti récepteur (13) et sont en particulier liés à celui-ci, et/ou
- la tôle de fond (6), la plaque supérieure (10), les rails perforés (11) et les boulons enfichables (12) et/ou le volet (8a) sont constitués d'un métal.

11. Procédé d'équipement d'une armoire de distribution électrique avec un module de toit climatisé ou un module de toit à antennes,
**caractérisé en ce que**
le procédé comprend des étapes consistant à:
- desserrer les éléments de liaison de l'ancien toit du boîtier d'armoire restant,
- retirer l'ancien toit,
- déposer le nouveau module de toit complètement pré-monté et équipé des nouveaux composants sur la face supérieure ouverte du boîtier d'armoire, dans lequel le module de toit est équipé de composants électriques sous la forme de tiroirs standard de 27,26 cm (19 pouces) et/ou d'antennes,
- aligner le nouveau module de toit par rapport au boîtier d'armoire restant, et
- fixer le module de toit sur le boîtier restant.

12. Procédé selon la revendication 11,
**caractérisé en ce que**:
- avant de desserrer les liaisons de l'ancien toit, la au moins une porte du boîtier de l'armoire est ouverte et le desserrage des éléments de liaison se fait par la porte ouverte depuis l'intérieur de l'armoire de distribution et, vice versa, la fixation du nouveau module de toit se fait à travers la porte ouverte depuis l'intérieur de l'armoire de distribution, et/ou
- avant de déposer le nouveau module de toit, celui-ci est équipé de tous les composants souhaités et complètement pré-monté, et/ou
- l'alignement du module de toit se fait automatiquement par la liaison des dispositifs de fixation du module de toit par rapport au boîtier d'armoire restant.

13. Procédé selon l'une quelconque des revendications précédentes, **caractérisé en ce que**:
- avant ou après la fixation du nouveau module de toit, il se fait une mise à la terre du module de toit avec l'équipement interne enterré du boîtier d'armoire restant, et/ou
- avant ou après la fixation du module de toit, on procède à l'alimentation en énergie et/ou en données des composants électriques agencés à l'intérieur du module de toit à l'intérieur du boîtier d'armoire restant, et/ou
- on procède au pré-montage du nouveau module de toit,
- on choisit le cadre d'adaptation convenant au boîtier d'armoire à monter par la suite,
- on raccorde le cadre d'adaptation au couvercle supérieur et
- éventuellement, on intègre les composants d'équipement souhaités, en particulier une antenne, à l'espace interne du module de toit.

14. Procédé selon l'une quelconque des revendications précédentes, **caractérisé en ce que**:
- l'équipement interne, en particulier l'antenne, est monté dans l'espace interne (20) du couvercle supérieur avant la fixation du cadre d'adaptation sur le couvercle supérieur, et/ou
- avant la fixation du cadre d'adaptation sur le couvercle supérieur, on monte une tôle de fond (6) sur le cadre d'adaptation (2), qui ferme par la suite l'espace interne du boîtier d'armoire de manière à le protéger contre le PEM vers le haut et/ou
- la tôle de fond (6) est montée entre le cadre d'adaptation (2) et le couvercle supérieur.

15. Procédé selon la revendication 14,
**caractérisé en ce que**:
- avant la fixation de la tôle de fond (6), on fait passer un câble menant aux équipements électriques du module de toit à travers un passage de câble (6a) protégé contre le PEM dans la tôle de fond (6), et/ou
- avant le montage de l'équipement électrique interne, dans l'espace interne (20) du couvercle supérieur, on monte à cet effet un bâti récepteur (13) à l'intérieur du couvercle supérieur.
